# EUROPÄISCHE PATENTANMELDUNG

(11) **EP 4 520 464 A2**
(43) Veröffentlichungstag der Anmeldung: **12.03.2025**
(21) Anmeldenummer: 24193790.3
(22) Anmeldetag: 09.08.2024
(51) Int. Cl.: B23B 5/16, B23B 27/12, B23K 37/08

(54) **VERFAHREN ZUM ENTFERNEN EINES GRATES**

(30) Priorität: 07.09.2023 DE 102023124183
(71) Anmelder: Lisa Dräxlmaier GmbH, 84137 Vilsbiburg (DE)
(72) Erfinder: Herzing, Thomas, 84032 Landshut (DE); Kapfenberger, Thomas, 84036 Kumhausen (DE)

(57) **Zusammenfassung**

Verfahren (300) zum Entfernen eines Grates (102), welcher beim Rotationsfügen einer Metallbuchse (110) mit hohlzylinderförmigem Abschnitt (110a) in eine für das Fügen der Metallbuchse (110) vorgesehenen Öffnung (101) einer Stromschiene (100) entsteht, wobei das Verfahren (300) folgendes umfasst: Zentrieren (301) eines oder mehrerer Schneidräder (202) um die Öffnung (111) des hohlzylinderförmigen Abschnitts (110a) der Metallbuchse (110); und Antreiben (302) der einen oder mehreren Schneidräder (202) zum Ausführen einer Schneidbewegung entlang des Grates (102) der Stromschiene (100), um den Grat (102) zu entfernen, wobei die Schneidbewegung sowohl eine Drehbewegung um die Öffnung (111) des hohlzylinderförmigen Abschnitts (110a) der Metallbuchse (110) als auch eine Zustellbewegung hin zu dem Grat (102) umfasst.

## Beschreibung

### Technisches Gebiet

Die vorliegende Erfindung betrifft ein Verfahren zum Entfernen eines Grates und ein entsprechendes Entgratwerkzeug. Die Erfindung betrifft insbesondere eine Entgratmethode für die Fügestelle von rotations-reibgeschweißten Buchsen auf Aluminium.

### Stand der Technik

Die Kontaktierung der Aluminium-Stromschienen (oder Alu-Stanzlinge) für die E-Mobilität wird üblicherweise mittels Rotationsreibschweißen von Kupferbuchsen ausgeführt. Durch die Materialeigenschaften von Aluminium kommt es hierbei häufig zu einer Gratbildung zwischen Buchse und Aluminium-Schiene. Der Grat ist durch den Prozess nicht vermeidbar und muss entfernt werden, da er eine Störkontur für die folgenden Prozessschritte darstellt und sich lösende Gratteile einen Kurzschluss verursachen können. Der Grat wird herkömmlicherweise mit einem Seitenschneider partiell entfernt, dabei ist bündiges Entgraten kaum möglich, so dass Metall-Splitter oder Metallteile an der Entgratungsstelle zurückbleiben. Mit ungeführten Schneidwerkzeugen wie z.B. Seitenschneider oder auch einem Teppichmesser besteht erhöhte Verletzungsgefahr für den Anwender und die Oberflächenbeschichtung der Buchse kann beschädigt werden.

### Beschreibung der Erfindung

Eine Aufgabe der Erfindung ist es daher, ein Konzept zur Entgratung von Graten, die beim Rotationsreibschweißen von Kupferbuchsen in Aluminium-Stromschienen entstehen zu schaffen, bei dem die oben beschriebenen Nachteile in Bezug auf Sicherheit und Verletzungsgefahr nicht auftreten.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Die erfinderische Lösung basiert auf der Idee, den Grat mit einem entwickelten Hilfswerkzeug zu entfernen, welches sich für den manuellen und maschinellen Einsatz eignet. Dabei wird ein Schneidrad über eine Vorrichtung im Buchsenloch positioniert und zentrisch um die Buchse geführt. Das Schneidrad trennt den Grat bündig zwischen Schiene und Buchse ab. Der Grat kann anschließend leicht entfernt werden. Die hier vorgestellte Methodik des entwickelten Hilfswerkzeugs, das bereits im manuellen Prozess erprobt worden ist, kann so in eine automatisierte Methode überführt werden, wie in dieser Offenbarung näher beschrieben.

Die hier vorgestellte Lösung eignet sich insbesondere für die Industrialisierung des Rotationsreibschweiß-Verfahrens als eine automatisierungsfähige Methode, um Grate sicher zu entfernen. Der Werkzeughersteller kann die hier vorgestellte Methode als Arbeitsschritte in der Anlage berücksichtigen, um eine Fertigungsanlage mit automatisiertem Entgratwerkzeug entsprechend dieser Offenbarung bereitzustellen.

Wie schon erwähnt, ist die hier vorgestellte Methode automatisierbar und kann ins Anlagenkonzept eingeplant werden. Mit dem Einsatz eines Entgratwerkzeugs oder einer Entgratungsmethode, wie in dieser Offenbarung beschrieben, stört kein störender Grat mehr die nachfolgenden Prozessschritte, wie zum Beispiel Gehäusemontage, Schraubprozesse und technische Sauberkeit.

Gemäß einem ersten Aspekt wird die oben beschriebene Aufgabe gelöst durch ein Verfahren zum Entfernen eines Grates, welcher beim Rotationsfügen einer Metallbuchse mit hohlzylinderförmigem Abschnitt in eine für das Fügen der Metallbuchse vorgesehenen Öffnung einer Stromschiene entsteht, wobei das Verfahren folgendes umfasst: Zentrieren eines oder mehrerer Schneidräder um die Öffnung des hohlzylinderförmigen Abschnitts der Metallbuchse; und Antreiben der einen oder mehreren Schneidräder zum Ausführen einer Schneidbewegung entlang des Grates der Stromschiene, um den Grat zu entfernen, wobei die Schneidbewegung sowohl eine Drehbewegung um die Öffnung des hohlzylinderförmigen Abschnitts der Metallbuchse als auch eine Zustellbewegung hin zu dem Grat umfasst.

Mit einem solchen Verfahren lässt sich ein gerader Schnitt mit dem Schneidrad ausführen, da das Schneidrad zentriert und zugestellt zu dem Grat hin umläuft und so gleichmäßig den Grat abschneiden kann. Grate, die insbesondere beim Rotationsreibschweißen von Kupferbuchsen in Aluminium-Stromschienen entstehen, können somit sicher und ohne Verletzungsgefahr entfernt werden.

Das Rotationsfügen ist beispielsweise ein Rotationsschweißen oder ein Rotationsreibschweißen oder ein anderes ähnliches Verfahren. Es kann sich auch um ein Kleben handeln. Die Stromschiene ist beispielsweise eine Aluminium-Stromschiene. Die Metall-Buchse ist beispielsweise eine Kupfer-Buchse.

Über die Zustellbewegung der einen oder mehreren Schneidräder wird sichergestellt, dass das jeweilige Schneidrad stets am Grat anliegt und ausreichend Druck erzeugt wird, dass der Grat über die Schneide des jeweiligen Schneidrads abgetrennt werden kann.

Gemäß einer beispielhaften Ausführungsform des Verfahrens umfassen die einen oder mehrere Schneidräder zumindest drei Schneidräder, die symmetrisch zueinander angeordnet sind, und sich selbst um die Öffnung des hohlzylinderförmigen Abschnitts der Metallbuchse zentrieren.

Damit wird der technische Vorteil erreicht, dass sich die drei oder mehr Schneidräder aufgrund ihrer symmetrischen Anordnung um die Öffnung des hohlzylinderförmigen Abschnitts der Metallbuchse selbst zentrieren können.

Bei mehreren Schneidrädern erfolgt ein gleichzeitiges Schneiden des Grates über die jeweiligen Schneiden der Schneidräder, so dass der Schneideprozess schneller und effizienter ausgeführt werden kann. Die Schneidräder haben dabei jeweils eine Schneide, welche beim Schneidprozess zusammenwirken und ein gleichzeitiges Schneiden bewirken.

Gemäß einer beispielhaften Ausführungsform des Verfahrens sind die zumindest drei Schneidräder in gleichem Abstand zueinander und in gleichem Abstand zu der Öffnung des hohlzylinderförmigen Abschnitts der Metallbuchse angeordnet.

Damit können sich die zumindest drei Schneidräder selbst zentrieren.

Es hat sich gezeigt, dass drei gleichartige Schneidräder, die in einem Winkel von jeweils 120 Grad zueinander angeordnet sind, besonders vorteilhaft sind, um ein schnelles und sauberes Schneidergebnis zu erhalten. Natürlich können auch unterschiedliche Schneidräder genutzt werden, die beispielsweise einen unterschiedlichen Radradius aufweisen. Die Schneiden an den Schneidrädern können in allen Fällen entweder gerade ausgeführt sein oder Zacken aufweisen. Allerdings sind gerade Schneiden insbesondere für ein sauberes Schneiden ohne Rückstände von Vorteil.

Gemäß einer beispielhaften Ausführungsform des Verfahrens erfolgt das Zentrieren der einen oder mehreren Schneidräder über einen Schaft oder eine Vorrichtung, an dem bzw. der die einen oder mehreren Schneidräder befestigt sind; wobei der Schaft oder die Vorrichtung zum Zentrieren der einen oder mehreren Schneidräder in die Öffnung des hohlzylinderförmigen Abschnitts der Metallbuchse eingeführt wird.

Über den Schaft lässt sich auch eine Anordnung von Schneidrädern zentrieren, die beispielsweise nur über ein oder zwei Schneidräder verfügt.

Gemäß einer beispielhaften Ausführungsform des Verfahrens umfasst das Verfahren ferner: Ausüben einer Zustellkraft auf die einen oder mehreren Schneidräder, um die Zustellbewegung der einen oder mehreren Schneidräder auszuführen und die einen oder mehreren Schneidräder gegen den Grat zu pressen.

Über die Zustellkraft auf die einen oder mehreren Schneidräder lässt sich die Zustellbewegung der ein oder mehreren Schneidräder realisieren. Die Zustellkraft stellt sicher, dass das jeweilige Schneidrad stets am Grat anliegt und ausreichend Druck erzeugt wird, dass der Grat über die Schneide des jeweiligen Schneidrads abgetrennt werden kann. Die Zustellkraft kann beispielsweise eine Hebelkraft oder eine Kippkraft sein, welche auf die einen oder mehreren Schneidräder einwirkt.

Gemäß einer beispielhaften Ausführungsform des Verfahrens umfasst das Verfahren ferner: Lagern eines jeweiligen Schneidrads der einen oder mehreren Schneidräder an einem Lager mit einem Eingriffselement, so dass das jeweilige Schneidrad drehbar und zu dem Grat hin zustellbar gelagert ist; und Ausüben einer Kraft auf das Eingriffselement zum Ausführen der Drehbewegung und der Zustellbewegung.

Über dieses Eingriffselement kann eine Kraft auf das jeweilige Schneidrad ausgeübt werden, so dass es zu einem Schneidvorgang kommt. Die Kraft kann entweder manuell oder mittels einer Maschine ausgeübt werden.

Gemäß einer beispielhaften Ausführungsform des Verfahrens umfasst das Lager ein Drehlager zum Ausführen der Drehbewegung des jeweiligen Schneidrads und ein Kipplager zum Ausführen der Zustellbewegung des jeweiligen Schneidrads hin zu dem Grat.

Über die Zustellbewegung des jeweiligen Schneidrads hin zu dem Grat wird sichergestellt, dass das jeweilige Schneidrad stets am Grat anliegt und ausreichend Druck erzeugt wird, dass der Grat über die Schneide des jeweiligen Schneidrads abgetrennt werden kann. Über das Drehlager wird sichergestellt, dass der Schneidvorgang entlang des Grates erfolgt, so dass es zu einer vollständigen Entfernung des Grates kommt.

Gemäß einer beispielhaften Ausführungsform des Verfahrens umfasst das Kipplager einen rotationssymmetrischen Abschnitt, an dem das jeweilige Schneidrad drehbar befestigt ist, so dass das jeweilige Schneidrad bei einer Drehbewegung des Drehlagers eine Drehbewegung um den rotationssymmetrischen Abschnitt des Kipplagers vollführt und das jeweilige Schneidrad bei der Schneidbewegung entlang des Grates gleichmäßig belastet wird.

Dies bietet den technischen Vorteil, dass über die Drehbewegung des Drehlagers die Schneide des jeweiligen Schneidrads um die Öffnung des hohlzylinderförmigen Abschnitts der Metallbuchse geführt werden kann, um den Grat vollständig zu entfernen, und dass gleichzeitig das jeweilige Schneidrad sich um seine eigene Achse drehen kann, welche der Drehachse des rotationssymmetrischen Abschnitts des Kipplagers entspricht, an dem das jeweilige Schneidrad befestigt ist. Somit dreht sich das jeweilige Schneidrad beim Schneidevorgang und es findet eine gleichmäßige Abnutzung bzw. Belastung der Schneide des Schneidrads statt.

Gemäß einem zweiten Aspekt wird die oben beschriebene Aufgabe gelöst durch ein Computerprogramm, umfassend Befehle, die bei der Ausführung des Programms durch einen Computer diesen veranlassen, das Verfahren gemäß dem vorstehenden ersten Aspekt auszuführen.

Mit einem solchen Computerprogramm lässt sich die Schneidbewegung der einen oder mehreren Schneidräder automatisiert steuern und das Verfahren lässt sich automatisch ausführen. Das Computerprogramm lässt sich beispielsweise auf einer Steuerung einer Werkzeugmaschine einsetzen, um einen Grat entsprechend dem oben beschriebenen Verfahren zu entfernen.

Gemäß einem dritten Aspekt wird die oben beschriebene Aufgabe gelöst durch ein Entgratwerkzeug zum Entfernen eines Grates, welcher beim Rotationsfügen einer Metallbuchse mit hohlzylinderförmigem Abschnitt in eine für das Fügen der Metallbuchse vorgesehenen Öffnung einer Stromschiene entsteht, wobei das Entgratwerkzeug folgendes umfasst: ein oder mehrere Schneidräder, die zentriert um die Öffnung des hohlzylinderförmigen Abschnitts der Metallbuchse platzierbar sind; und einen Eingriff zum Antreiben der einen oder mehreren Schneidräder zum Ausführen einer Schneidbewegung entlang des Grates der Stromschiene, um den Grat zu entfernen, wobei die Schneidbewegung sowohl eine Drehbewegung um die Öffnung des hohlzylinderförmigen Abschnitts der Metallbuchse als auch eine Zustellbewegung hin zu dem Grat umfasst.

Mit einem solchen Entgratwerkzeug zum Entfernen eines Grates lassen sich gerade Schnitte ausführen, um den Grat sauber und ohne Rückstände zu entfernen, da die einen oder mehreren Schneidräder zentriert um die Öffnung des hohlzylinderförmigen Abschnitts der Metallbuchse platzierbar sind und so gleichmäßig den Grat abschneiden können. Grate, die insbesondere beim Rotationsreibschweißen von Kupferbuchsen in Aluminium-Stromschienen entstehen, können somit sicher und ohne Verletzungsgefahr entfernt werden.

Wie bereits oben beschrieben, ist das Rotationsfügen beispielsweise ein Rotationsschweißen oder ein Rotationsreibschweißen oder ein anderes ähnliches Verfahren. Es kann sich auch um ein Kleben handeln. Die Stromschiene ist beispielsweise eine Aluminium-Stromschiene. Die Metall-Buchse ist beispielsweise eine Kupfer-Buchse.

### Kurze Figurenbeschreibung

Im Folgenden wird die Erfindung anhand von Ausführungsbeispielen und den Figuren näher beschrieben. Es zeigen:
- Fig. 1a: eine 3D-Darstellung einer Stromschiene 100 mit einer für das Rotationsreibschweißen einer Metallbuchse vorgesehenen Öffnung 101;
- Fig. 1b: eine 3D-Darstellung der Stromschiene 100 aus Figur 1a mit in die Öffnung 101 einzubringender Metallbuchse 110;
- Fig. 2: eine 3D-Darstellung der Stromschiene 100 aus Figur 1a mit mittels Rotationsreibschweißen in die Öffnung 101 gefügter Metallbuchse 110, wobei ein Grat 102 in der Stromschiene 100 erkennbar ist;
- Fig. 3: eine schematische Darstellung eines erfindungsgemäßen Verfahrens 300 zum Entfernen eines Grates.
- Fig. 4: eine 3D-Darstellung eines erfindungsgemäßen Entgratwerkzeugs 200;
- Fig. 5: eine 3D-Darstellung des erfindungsgemäßen Entgratwerkzeugs 200, das in die für das Fügen der Metallbuchse vorgesehene Öffnung 101 der Stromschiene 100 aus Figur 2 eingesteckt ist;
- Fig. 6: eine schematische Darstellung des Funktionsprinzips des erfindungsgemäßen Entgratwerkzeugs 200; und
- Fig. 7: eine Schnittdarstellung des erfindungsgemäßen Entgratwerkzeugs 200.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

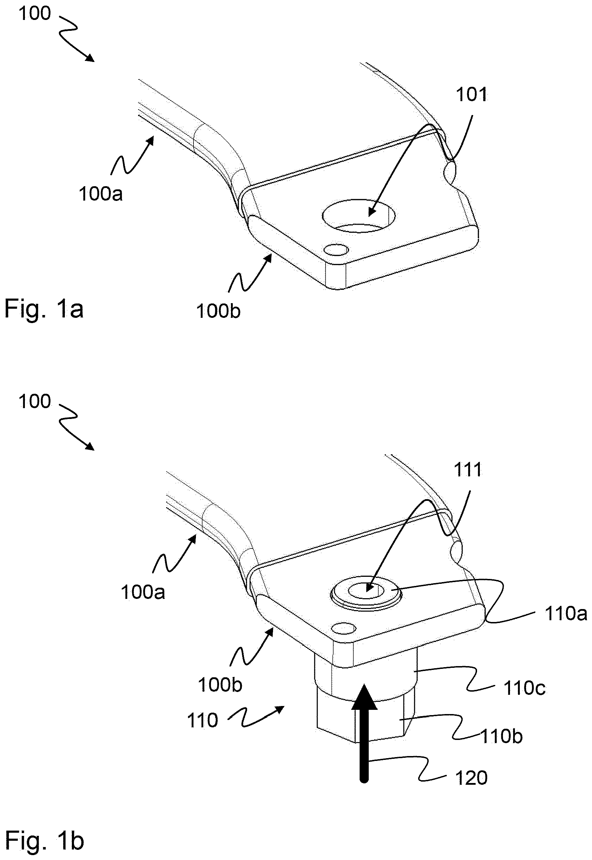

Fig. 1a zeigt eine 3D-Darstellung einer Stromschiene 100 mit einer für das Rotationsreibschweißen einer Metallbuchse vorgesehenen Öffnung 101.

Die Stromschiene 100 kann beispielsweise ein Teil einer Doppelstromschiene sein, über welche die Batterie eines Elektrofahrzeugs an die Ladeinfrastruktur angschlossen wird. Die Stromschiene 100 ist ein Flachleiter, der aus massivem Metall besteht, zum Beispiel aus Aluminium.

Die Stromschiene 100 kann einen ersten isolierten Abschnitt 100a umfassen und einen zweiten nicht-isolierten Abschnitt 100b, der an einem Ende der Stromschiene 100 ausgebildet ist. In dem nicht-isoliertem Abschnitt 100b ist eine Öffnung 101 vorhanden, welche sich für das Fügen einer Metallbuchse 110, beispielsweise einer Kupferbuchse eignet, um eine stoffschlüssige elektrische Verbindung der Stromschiene 100 mit der Metallbuchse 110 herzustellen.

Zum Herstellen der Rotationsfügeverbindung, beispielsweise einer Rotationsschweißverbindung oder einer Rotationsreibschweißverbindung lässt sich die Stromschiene 100 in eine Maschine einspannen.

Fig. 1b zeigt eine 3D-Darstellung der Stromschiene 100 aus Figur 1a mit in die Öffnung 101 einzubringender Metallbuchse 110.

Die Metallbuchse 110 lässt sich in die Öffnung 101 der Stromschiene 100 einführen, um die Metallbuchse 110 mittels Rotationsfügeverbindung, beispielsweise einer Rotationsschweißverbindung oder einer Rotationsreibschweißverbindung, mit der Stromschiene 100 stoffschlüssig elektrisch zu verbinden.

Dazu wird eine Kraft 120 ausgeübt, welche die Metallbuchse 110 in die Öffnung 101 der Stromschiene presst.

Nach dem ersten Schritt "Schiene in Maschine spannen" entsprechend Figur 1a zeigt somit Figur 1b den zweiten Schritt "Buchse mit Schiene verbinden".

Die Metallbuchse 110 umfasst beispielsweise einen ersten Abschnitt 110a, dessen Durchmesser für das Fügen in die Öffnung 101 der Stromschiene 100 angepasst ist, also beispielsweise in etwa gleich groß oder etwas größer ist wie der Durchmesser der Öffnung 101. Die Metallbuchse umfasst beispielsweise einen zweiten Abschnitt 110c, dessen Durchmesser größer ist als der Durchmesser der Öffnung 101, um einen Halt für das Fügen zu bieten, wenn der erste Abschnitt 110a bereits in die Metallbuchse 110 gefügt ist. Ferner kann die Metallbuchse einen dritten Abschnitt 1f10b umfassen, der als Mehrkant, beispielsweise Sechskant ausgeformt ist, um eine geeignete mechanische Verbindungsstelle auszubilden, zum Beispiel für den Eingriff eines Werkzeugs.

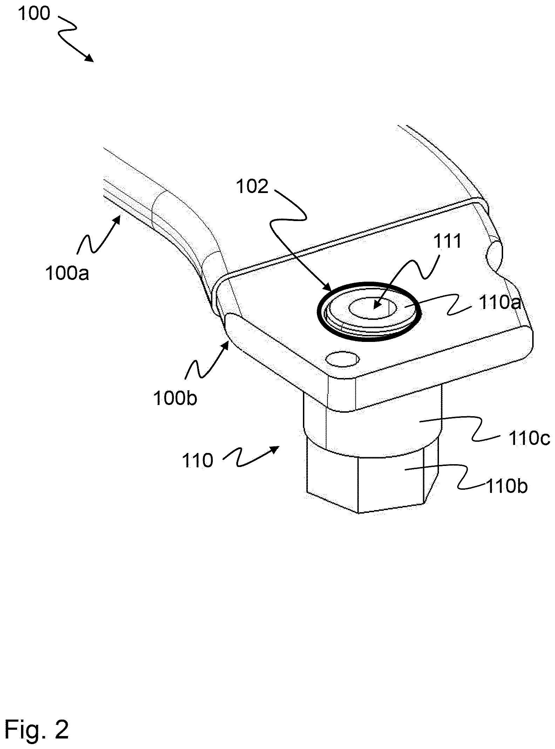

Fig. 2 zeigt eine 3D-Darstellung der Stromschiene 100 aus Figur 1a mit mittels Rotationsreibschweißen in die Öffnung 101 gefügter Metallbuchse 110, wobei ein Grat 102 in der Stromschiene 100 erkennbar ist.

Die Metallbuchse 110 ist in die Öffnung 101 der Stromschiene 100 gefügt. Beim Fügevorgang ist ein Grat 102 an der Stromschiene 100 entstanden, der entfernt werden soll. In Figur 2 ist der Kranz in der Verbindung zwischen Stromschiene 100 und Metallbuchse 110 zu sehen, in dem der Grat 102 entstanden ist.

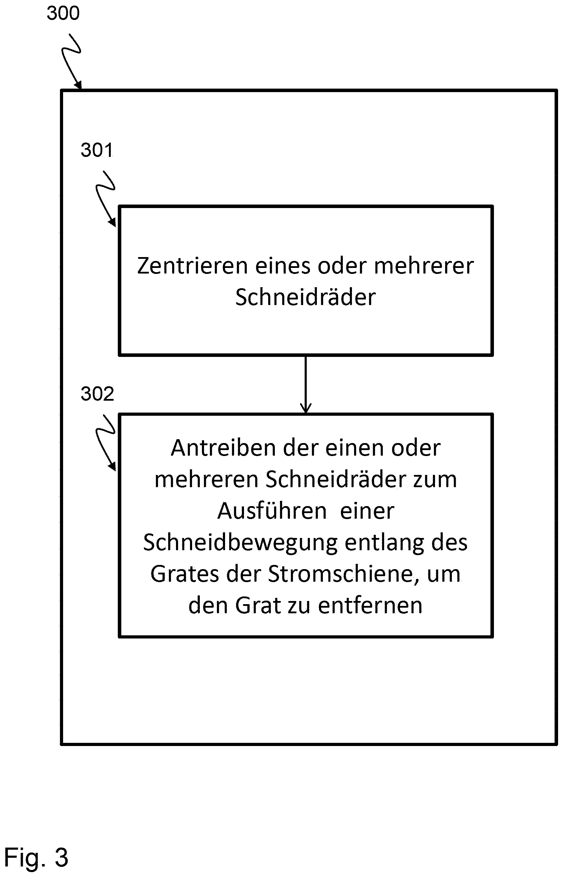

Fig. 3 zeigt eine schematische Darstellung eines erfindungsgemäßen Verfahrens 300 zum Entfernen eines Grates.

Das Verfahren 300, hier auch als Methodik bezeichnet, dient zum Entfernen eines Grates 102, welcher beim Rotationsfügen einer Metallbuchse 110 mit hohlzylinderförmigem Abschnitt 110a in eine für das Fügen der Metallbuchse 110 vorgesehenen Öffnung 101 einer Stromschiene 100 entsteht, wie oben zu den Figuren 1a, 1b und 2 beschrieben.

Das Verfahren 300 umfasst die folgenden Schritte:
Zentrieren (301) eines oder mehrerer Schneidräder 202 um die Öffnung 111 des hohlzylinderförmigen Abschnitts 110a der Metallbuchse 110; und
Antreiben 302 der einen oder mehreren Schneidräder 202 zum Ausführen einer Schneidbewegung entlang des Grates 102 der Stromschiene 100, um den Grat 102 zu entfernen, wobei die Schneidbewegung sowohl eine Drehbewegung um die Öffnung 111 des hohlzylinderförmigen Abschnitts 110a der Metallbuchse 110 als auch eine Zustellbewegung hin zu dem Grat 102 umfasst.

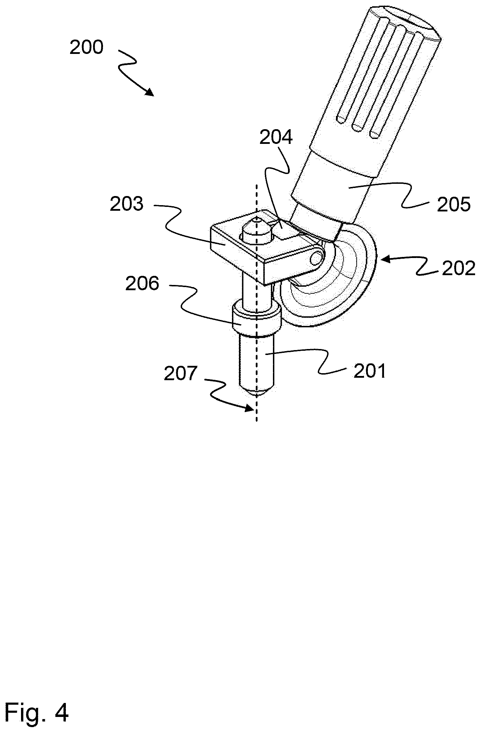

Ein Beispiel eines solchen Schneidrades 202 ist in den nachfolgenden Figuren 4 bis 7 dargestellt. Das Verfahren 300 ist hier allgemein beschrieben und lässt sich nicht nur auf ein Schneidrad 202, sondern auf mehrere Schneidräder 202 anwenden. Die einen oder mehreren Schneidräder 202 können an einem Schaft 201 angebracht sein, wie beispielsweise in den nachfolgenden Figure 4 bis 7 dargestellt oder es ist kein Schaft vorhanden und die Schneidräder 202 sind selbstzentrierend zueinander angeordnet, beispielsweise an einer Aufhängung angebracht.

Die Drehbewegung erfolgt rotationssymmetrisch um die Öffnung 111 des hohlzylinderförmigen Abschnitts 110a der Metallbuchse 110, also um ein Zentrum dieser Öffnung.

In einem Ausführungsbeispiel des Verfahrens 300 umfassen die einen oder mehreren Schneidräder 202 zumindest drei Schneidräder 202 (nicht in den Figuren dargestellt), die symmetrisch zueinander angeordnet sind, und sich selbst um die Öffnung 111 des hohlzylinderförmigen Abschnitts 110a der Metallbuchse 110 zentrieren 301.

Die zumindest drei Schneidräder 202 sind beispielsweise in gleichem Abstand zueinander und in gleichem Abstand zu der Öffnung 111 des hohlzylinderförmigen Abschnitts 110a der Metallbuchse 110 angeordnet.

In einem Ausführungsbeispiel des Verfahrens 300 erfolgt das Zentrieren der einen oder mehreren Schneidräder 202 über einen Schaft 201, wie in den Figuren 4 bis 7 dargestellt, an dem die einen oder mehreren Schneidräder 202 befestigt sind. Dazu wird der Schaft 201 zum Zentrieren 301 der einen oder mehreren Schneidräder 202 in die Öffnung 111 des hohlzylinderförmigen Abschnitts 110a der Metallbuchse 110 eingeführt, wie in den Figuren 4 bis 7 beispielhaft dargestellt. Bei drei und mehr Schneidrädern 202 ist ein solcher Schaft 201 nicht erforderlich, da sich die Schneidräder dann selbst zentrieren können.

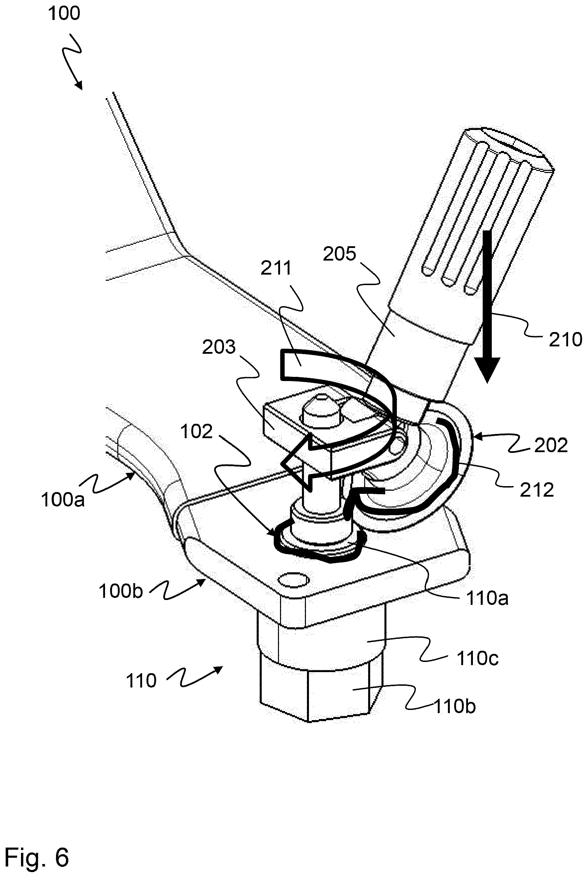

Das Verfahren 300 kann ferner den folgenden Schritt umfassen: Ausüben einer Zustellkraft 210, beispielsweise entsprechend der Darstellung in Figur 6, auf die einen oder mehreren Schneidräder 202, um die Zustellbewegung der einen oder mehreren Schneidräder 202 auszuführen und die einen oder mehreren Schneidräder 202 gegen den Grat 102 zu pressen. Die Zustellkraft 210 ist in dem Beispiel der Figur 6 nur für ein Schneidrad 202 dargestellt. Bei mehreren Schneidrädern 202 kann auf jedes Schneidrad 202 eine dementsprechende Zustellkraft 210 ausgeübt werden.

Das Verfahren 300 kann ferner den folgenden Schritt umfassen: Lagern eines jeweiligen Schneidrads 202 der einen oder mehreren Schneidräder 202 an einem Lager 203, 204 (siehe die Figuren 4 bis 7) mit einem Eingriffselement 205, so dass das jeweilige Schneidrad 202 drehbar und zu dem Grat 102 hin zustellbar gelagert ist; und Ausüben einer Kraft auf das Eingriffselement 205 zum Ausführen der Drehbewegung und der Zustellbewegung.

Das Lager 203, 204 kann ein Drehlager 203 zum Ausführen der Drehbewegung des jeweiligen Schneidrads 202 und ein Kipplager 204 zum Ausführen der Zustellbewegung des jeweiligen Schneidrads 202 hin zu dem Grat 102 umfassen, wie in den Figuren 4 bis 7 für eie Schneidrad dargestellt. Bei mehreren Schneidrädern 202 kann jedes Schneidrad 202 ein entsprechendes Drehlager 203 und ein entsprechendes Kipplager 204 aufweisen.

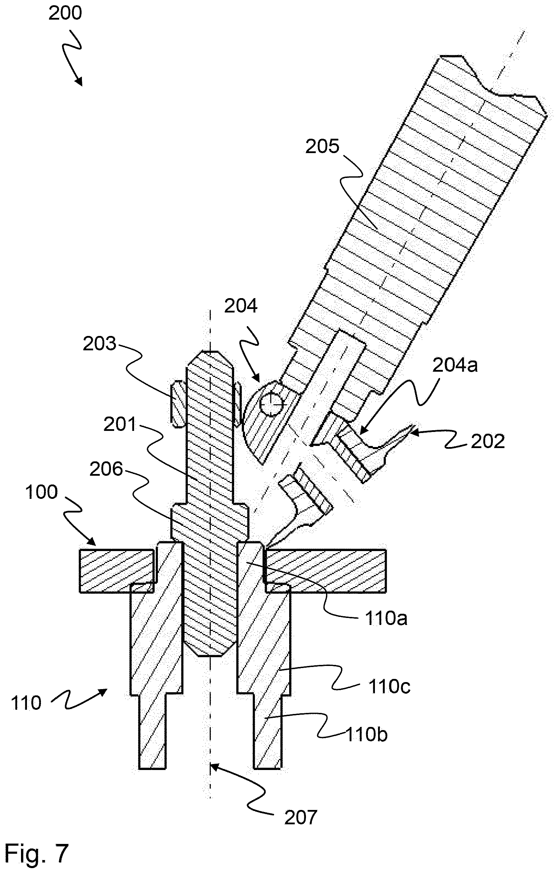

Das Kipplager 204 kann beispielsweise einen rotationssymmetrischen Abschnitt 204a umfassen, wie in Figur 7 dargestellt, an dem das jeweilige Schneidrad 202 drehbar befestigt ist, so dass das jeweilige Schneidrad 202 bei einer Drehbewegung des Drehlagers 203 eine Drehbewegung um den rotationssymmetrischen Abschnitt 204a des Kipplagers 204 vollführt, so dass das jeweilige Schneidrad 202 bei der Schneidbewegung entlang des Grates 102 gleichmäßig belastet wird.

Das hier beschriebene Verfahren kann in einem Computerprogramm oder Computerprogrammprodukt genutzt werden. Ein solches Computerprogramm umfasst Befehle, die bei der Ausführung des Programms durch einen Computer diesen veranlassen, das Verfahren 300, wie oben beschrieben, auszuführen.

Fig. 4 zeigt eine 3D-Darstellung eines erfindungsgemäßen Entgratwerkzeugs 200.

Das Entgratwerkzeug 200 dient zum Entfernen eines Grates 102, welcher beim Rotationsfügen einer Metallbuchse 110 mit hohlzylinderförmigem Abschnitt 110a in eine für das Fügen der Metallbuchse 110 vorgesehenen Öffnung 101 einer Stromschiene 100 entsteht, wie in den Figuren 1a, 1b und 2 dargestellt.

Das Entgratwerkzeug 200 umfasst ein oder mehrere Schneidräder 202 (wobei in Figur 4 nur ein Schneidrad dargestellt ist), die zentriert um die Öffnung 111 des hohlzylinderförmigen Abschnitts 110a der Metallbuchse 110 platzierbar sind.

Das Entgratwerkzeug 200 umfasst einen Eingriff zum Antreiben der einen oder mehreren Schneidräder 202 zum Ausführen einer Schneidbewegung entlang des Grates 102 der Stromschiene 100, um den Grat 102 zu entfernen.

Die Schneidbewegung umfasst sowohl eine Drehbewegung um die Öffnung 111 des hohlzylinderförmigen Abschnitts 110a der Metallbuchse 110 als auch eine Zustellbewegung hin zu dem Grat 102.

In einer beispielhaften Ausführungsform, wie in Figur 4 dargestellt, umfasst das Entgratwerkzeug 200 einen Schaft 201 der zum Einführen in eine Öffnung 111 des hohlzylinderförmigen Abschnitts 110a der Metallbuchse 110, wie beispielsweise in Figur 2 dargestellt, ausgebildet ist.

In der Ausführungsform der Figur 4 umfasst das Entgratwerkzeug 200 ein einzelnes Schneidrad 202, das beweglich an dem Schaft 201 befestigt ist, und ausgebildet ist, bei in die Öffnung 111 des hohlzylinderförmigen Abschnitts 110a der Metallbuchse 110 eingeführtem Schaft 201 eine Schneidbewegung entlang des Grates 102 der Stromschiene 100 auszuführen, um den Grat 102 zu entfernen. Es versteht sich, dass Figur 4 nur ein Beispiel mit einem Schneidrad zeigt, es können ebenso mehrere Schneidräder vorhanden sein, die den Grat 102 gleichzeitig schneiden.

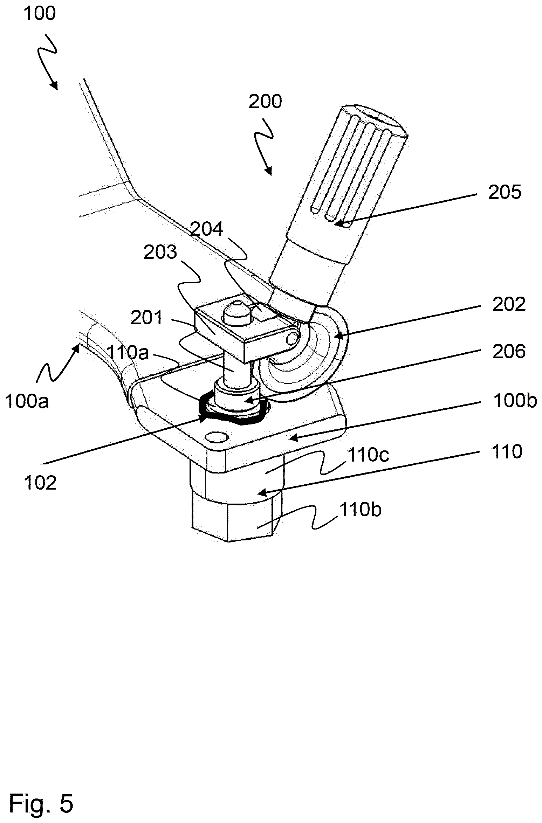

Fig. 5 zeigt eine 3D-Darstellung des erfindungsgemäßen Entgratwerkzeugs 200 aus Figur 4, das in die für das Fügen der Metallbuchse vorgesehene Öffnung 101 der Stromschiene 100 aus Figur 2 eingesteckt ist.

Das Entgratwerkzeug 200 entspricht dem oben zu Figur 4 beschriebenen Entgratwerkzeug 200, das hier in Figur 5 in die für das Fügen der Metallbuchse 110 vorgesehene Öffnung 101 der Stromschiene 100 eingesteckt ist.

Wie oben beschrieben, umfasst das Entgratwerkzeug 200 in dieser beispielhaften Ausführungsform einen Schaft 201 der zum Einführen in eine Öffnung 111 des hohlzylinderförmigen Abschnitts 110a der Metallbuchse 110 ausgebildet ist; und ein Schneidrad 202, das beweglich an dem Schaft 201 befestigt ist, und ausgebildet ist, bei in die Öffnung 111 des hohlzylinderförmigen Abschnitts 110a der Metallbuchse 110 eingeführtem Schaft 201 eine Schneidbewegung entlang des Grates 102 der Stromschiene 100 auszuführen, um den Grat 102 zu entfernen.

Das Schneidrad 202 ist ausgebildet, sowohl eine Drehbewegung um den Schaft 201 als auch eine Kippbewegung hin zu dem Grat 102 auszuführen, um den Grat 102 zu entfernen.

Das Entgratwerkzeug 200 umfasst ein Drehlager 203, das ausgebildet ist, das Schneidrad 202 an dem Schaft 201 zu lagern und die Drehbewegung des Schneidrads 202 um den Schaft 201 auszuführen.

Das Entgratwerkzeug 200 umfasst zusätzlich ein Kipplager 204, das an dem Drehlager 203 ausgeformt ist, und ausgebildet ist, die Kippbewegung des Schneidrads 202 hin zu dem Grat 102 auszuführen.

Das Kipplager 204 umfasst beispielsweise einen rotationssymmetrischen Abschnitt 204a, an dem das Schneidrad 202 drehbar befestigt ist, so dass das Schneidrad 202 bei einer Drehbewegung des Drehlagers 203 eine Drehbewegung um den rotationssymmetrischen Abschnitt 204a des Kipplagers 204 vollführt, so dass das Schneidrad 202 bei der Schneidbewegung entlang des Grates 102 gleichmäßig belastet wird.

Das Kipplager 203 kann beispielsweise ein Eingriffselement 205 aufweisen, das ausgebildet ist, eine Hebelkraft 210 auf das Schneidrad 202 auszuüben, wie in Figur 5 näher dargestellt, um die Kippbewegung des Schneidrads 202 auszuführen und das Schneidrad 202 gegen den Grat 102 zu pressen.

Das Eingriffselement 205 kann ferner ausgebildet sein, eine Drehkraft 211 auf das Drehlager 203 auszuüben, wie in Figur 6 näher dargestellt, um die Drehbewegung des Schneidrads 202 um den Schaft 201 auszuführen.

Das Eingriffselement 205 kann beispielsweise ein Handgriff sein, wie in in den Figuren 4 und 5 dargestellt, über den das Entgratwerkzeug 200 manuell bedienbar ist. Alternativ kann das Eingriffselement 205 ein maschinell betätigbares Element sein, mit dem das Entgratwerkzeug 200 maschinell bedienbar ist. Das Entgratwerkzeug 200 kann beispielsweise mit dem Schaft 201 in eine Werkzeugmaschine eingeführt werden, welche über das Eingriffselement 205 die Schneidkraft in geeigneter Weise ausüben kann.

Das Entgratwerkzeug 200 kann zudem ein Stopper-Element 206 aufweisen, das ausgebildet ist, das Einführen des Schafts 201 in die Öffnung 111 des hohlzylinderförmigen Abschnitts 110a der Metallbuchse 110 ab einer vorgebbaren Position zu behindern bzw. zu stoppen. Das Stopper-Element 206 kann ein Teil des Schafts 201 sein, der einen größeren Durchmesser aufweist als die Öffnung 111 des hohlzylinderförmigen Abschnitts 110a der Metallbuchse 110.

Fig. 6 zeigt eine schematische Darstellung des Funktionsprinzips des erfindungsgemäßen Entgratwerkzeugs 200.

Das Entgratwerkzeug 200 entspricht dem oben zu Figur 5 bereits beschriebenen Entgratwerkzeug 200.

In Figur 6 ist genauer dargestellt, dass das Kipplager 203 ein Eingriffselement 205 aufweist, das ausgebildet ist, eine Hebelkraft 210 auf das Schneidrad 202 auszuüben, um die Kippbewegung des Schneidrads 202 auszuführen und das Schneidrad 202 gegen den Grat 102 zu pressen.

Ferner ist in Figur 6 näher dargestellt, dass das Eingriffselement 205 ausgebildet ist, eine Drehkraft 211 auf das Drehlager 203 auszuüben, um die Drehbewegung des Schneidrads 202 um den Schaft 201 auszuführen.

Zudem ist in Figur 6 die Schneidbewegung 212 des Schneidrads 202 näher dargestellt.

Durch den leichten Druck nach unten (Pfeilrichtung bzw. Hebelkraft 210 in Figur 6) wird das Schneidrad 202 an die Kante mit Grat 102 gedrückt. Mit einer rotatorischen Bewegung kann somit das Schneidrad 202 am Grat 102 entlang bewegt werden. Aufgrund des gelagerten Schneidrades 202 kann sich das Schneidrad 202 während der Bewegung drehen. Somit wird die Schneide des Schneidrades 202 gleichmäßig belastet.

Fig. 7 zeigt eine Schnittdarstellung des erfindungsgemäßen Entgratwerkzeugs 200.

Das Entgratwerkzeug 200 entspricht dem oben zu den Figuren 5 und 6 bereits beschriebenen Entgratwerkzeug 200.

In Figur 7 ist das Kipplager 204 im Schnitt dargestellt, das an dem Drehlager 203 ausgeformt ist, und ausgebildet ist, die Kippbewegung des Schneidrads 202 hin zu dem Grat 102 auszuführen.

Das Kipplager 204 umfasst einen rotationssymmetrischen Abschnitt 204a, an dem das Schneidrad 202 drehbar befestigt ist, so dass das Schneidrad 202 bei einer Drehbewegung des Drehlagers 203 eine Drehbewegung um den rotationssymmetrischen Abschnitt 204a des Kipplagers 204 vollführt, so dass das Schneidrad 202 bei der Schneidbewegung entlang des Grates 102 gleichmäßig belastet wird.

In Figur 7 ist das Eingriffselement 205 im Schnitt dargestellt, das an dem Kipplager 204 ausgeformt ist, und ausgebildet ist, eine Hebelkraft 210, auch Zustellkraft bezeichnet, auf das Schneidrad 202 auszuüben, wie oben zu Figur 6 beschrieben, um die Kippbewegung, auch Zustellbewegung bezeichnet, des Schneidrads 202 auszuführen und das Schneidrad 202 gegen den Grat 102 (nicht in Figur 7 dargestellt) zu pressen.

In einer weiteren Ausführungsform, die nicht in den Figuren dargestellt ist, umfasst das Entgratwerkzeug 200 eine oder mehrere weitere Schneidräder 202, die zusammen mit dem Schneidrad 202 beweglich an dem Schaft 201 befestigt sind, und ausgebildet sind, zusammen mit dem Schneidrad 202 entsprechende Schneidbewegungen entlang des Grates 102 der Stromschiene 100 auszuführen, um den Grat 102 zu entfernen.

Beispielsweise können diese einen oder mehreren weiteren Schneidräder 202 und das Schneidrad 202 in gleichem Abstand zueinander und in gleichem Abstand zu einer Längsachse 207 des Schafts 202 an dem Schaft 202 befestigt sein.

### BEZUGSZEICHENLISTE

- 110: Stromschiene
- 101: Öffnung der Stromschiene, für das Fügen der Metallbuchse vorgesehen
- 102: Grat
- 110: Metallbuchse, Kupferbuchse
- 110a: hohlzylinderförmiger Abschnitt der Metallbuchse
- 111: Öffnung des hohlzylinderförmigen Abschnitts der Metallbuchse

- 200: Entgratwerkzeug
- 201: Schaft
- 202: Schneidrad
- 203: Drehlager
- 204: Kipplager
- 204a: rotationssymmetrischer Abschnitt des Kipplagers
- 205: Eingriffselement
- 206: Stopper-Element
- 207: Längsachse des Schafts
- 210: Hebelkraft
- 211: Drehkraft

- 300: Verfahren zum Entfernen eines Grats
- 301: Zentrieren eines oder mehrerer Schneidräder
- 302: Antreiben der einen oder mehreren Schneidräder zum Ausführen einer Schneidbewegung

## Patentansprüche

1. Verfahren (300) zum Entfernen eines Grates (102), welcher beim Rotationsfügen einer Metallbuchse (110) mit hohlzylinderförmigem Abschnitt (110a) in eine für das Fügen der Metallbuchse (110) vorgesehenen Öffnung (101) einer Stromschiene (100) entsteht, wobei das Verfahren (300) folgendes umfasst:
Zentrieren (301) eines oder mehrerer Schneidräder (202) um die Öffnung (111) des hohlzylinderförmigen Abschnitts (110a) der Metallbuchse (110); und
Antreiben (302) der einen oder mehreren Schneidräder (202) zum Ausführen einer Schneidbewegung entlang des Grates (102) der Stromschiene (100), um den Grat (102) zu entfernen, wobei die Schneidbewegung sowohl eine Drehbewegung um die Öffnung (111) des hohlzylinderförmigen Abschnitts (110a) der Metallbuchse (110) als auch eine Zustellbewegung hin zu dem Grat (102) umfasst.

2. Verfahren (300) nach Anspruch 1,
wobei die einen oder mehreren Schneidräder (202) zumindest drei Schneidräder (202) umfassen, die symmetrisch zueinander angeordnet sind, und sich selbst um die Öffnung (111) des hohlzylinderförmigen Abschnitts (110a) der Metallbuchse (110) zentrieren (301).

3. Verfahren (300) nach Anspruch 2,
wobei die zumindest drei Schneidräder (202) in gleichem Abstand zueinander und in gleichem Abstand zu der Öffnung (111) des hohlzylinderförmigen Abschnitts (110a) der Metallbuchse (110) angeordnet sind.

4. Verfahren (300) nach einem der vorstehenden Ansprüche,
wobei das Zentrieren der einen oder mehreren Schneidräder (202) über einen Schaft (201) erfolgt, an dem die einen oder mehreren Schneidräder (202) befestigt sind;
wobei der Schaft (201) zum Zentrieren (301) der einen oder mehreren Schneidräder (202) in die Öffnung (111) des hohlzylinderförmigen Abschnitts (110a) der Metallbuchse (110) eingeführt wird.

5. Verfahren (300) nach einem der vorstehenden Ansprüche,
Ausüben einer Zustellkraft (210) auf die einen oder mehreren Schneidräder (202), um die Zustellbewegung der einen oder mehreren Schneidräder (202) auszuführen und die einen oder mehreren Schneidräder (202) gegen den Grat (102) zu pressen.

6. Verfahren (300) nach einem der vorstehenden Ansprüche, mit:
Lagern eines jeweiligen Schneidrads (202) der einen oder mehreren Schneidräder (202) an einem Lager (203, 204) mit einem Eingriffselement (205), so dass das jeweilige Schneidrad (202) drehbar und zu dem Grat (102) hin zustellbar gelagert ist; und
Ausüben einer Kraft auf das Eingriffselement (205) zum Ausführen der Drehbewegung und der Zustellbewegung.

7. Verfahren (300) nach Anspruch 6,
wobei das Lager (203, 204) ein Drehlager (203) zum Ausführen der Drehbewegung des jeweiligen Schneidrads (202) und ein Kipplager (204) zum Ausführen der Zustellbewegung des jeweiligen Schneidrads (202) hin zu dem Grat (102) umfasst.

8. Verfahren (300) nach Anspruch 7,
wobei das Kipplager (204) einen rotationssymmetrischen Abschnitt (204a) umfasst, an dem das jeweilige Schneidrad (202) drehbar befestigt ist, so dass das jeweilige Schneidrad (202) bei einer Drehbewegung des Drehlagers (203) eine Drehbewegung um den rotationssymmetrischen Abschnitt (204a) des Kipplagers (204) vollführt und das jeweilige Schneidrad (202) bei der Schneidbewegung entlang des Grates (102) gleichmäßig belastet wird.

9. Computerprogramm, umfassend Befehle, die bei der Ausführung des Programms durch einen Computer diesen veranlassen, das Verfahren gemäß den vorstehenden Ansprüchen auszuführen.

10. Entgratwerkzeug (100) zum Entfernen eines Grates (102), welcher beim Rotationsfügen einer Metallbuchse (110) mit hohlzylinderförmigem Abschnitt (110a) in eine für das Fügen der Metallbuchse (110) vorgesehenen Öffnung (101) einer Stromschiene (100) entsteht, wobei das Entgratwerkzeug (200) folgendes umfasst:
ein oder mehrere Schneidräder (202), die zentriert um die Öffnung (111) des hohlzylinderförmigen Abschnitts (110a) der Metallbuchse (110) platzierbar sind; und
einen Eingriff zum Antreiben der einen oder mehreren Schneidräder (202) zum Ausführen einer Schneidbewegung entlang des Grates (102) der Stromschiene (100), um den Grat (102) zu entfernen, wobei die Schneidbewegung sowohl eine Drehbewegung um die Öffnung (111) des hohlzylinderförmigen Abschnitts (110a) der Metallbuchse (110) als auch eine Zustellbewegung hin zu dem Grat (102) umfasst.
